# EUROPÄISCHE PATENTSCHRIFT

(11) **EP 2 058 153 B1**
(45) Veröffentlichungstag und Bekanntmachung des Hinweises auf die Patenterteilung: **20.01.2010**
(21) Anmeldenummer: 08018772.7
(22) Anmeldetag: 28.10.2008
(51) Int. Cl.: B60G 3/20, B60G 11/27, B60G 11/28

(54) **Fahrzeug mit luftgefederter Radaufhängung mit Lenkern**
Vehicle with air-suspended wheel suspension with steerers
Véhicule doté d'une suspension de roue pneumatique pourvue de bielles

(30) Priorität: 07.11.2007 DE 202007015428 U
(43) Veröffentlichungstag der Anmeldung: 13.05.2009
(73) Patentinhaber: Goldschmitt techmobil AG, 74746 Höpfingen (DE)
(72) Erfinder: Mairon, Markus, 74731 Walldürn (DE)
(74) Vertreter: Pöhner, Wilfried Anton, Dr.

(56) Entgegenhaltungen:
- DE-A1- 19 611 675
- DE-C1- 19 902 768
- DE-U1- 29 607 990
- US-A- 3 003 781
- US-A1- 2005 151 337
- US-B1- 6 471 223

## Beschreibung

Die Erfindung bezieht sich auf ein Fahrzeug mit luftgefederter Radaufhängung, bestehend aus mehreren Rädern, der Bodengruppe des Fahrzeugs und wenigstens je einem Luftfederbalg und wenigstens je einem länglichen Lenker pro Rad, welcher an einem Ende verschwenkbar mit der Bodengruppe verbunden ist und am anderen Ende das Radlager zur Aufnahme eines Rades trägt, wobei die Verschwenkachse und die Längsachse des Lenkers zueinander etwa rechtwinklig orientiert sind und beide etwa horizontal ausgerichtet sind.

Nach aktuellem Stand der Technik sind für sämtliche, schneller fahrenden Fahrzeuge auf Straßen ebenso wie auf Schienen die Räder durch bewegliche Führungselemente mit der Bodengruppe des Fahrzeuges verbunden. Als Federn sind Blattfedern besonders bei Nutzfahrzeugen sehr weit verbreitet, die sowohl die gelenkige Verbindung zwischen Fahrzeug und Rad als auch dessen Federung übernehmen. Die Führung des Rades ist jedoch nur ungenau definiert und die Blattfeder spricht erst oberhalb eines Schwellwertes an. Die Blattfeder wird meistens mit einer Starrachse kombiniert, also einer durchgehenden Verbindung zwischen zwei Rädern auf beiden Seiten des Fahrzeuges. Die ungefederten Massen dieses Konzeptes sind jedoch relativ hoch und das einfedernde Rad auf einer Seite beeinflusst zwangläufig das gegenüberliegende Rad.

Deshalb ist es für alle Fahrzeuge mit höheren Ansprüchen und/oder erhöhtem Raumbedarf zwischen den Rädern üblich, die Räder einzeln an der Bodengruppe aufzuhängen. Eine sehr kostengünstige und raumsparende Kombination ist ein Längslenker, der über einen quer dazu ausgerichteten Drehstab gefedert wird, wie z. B. beim Volkswagen Golf I - IV. Bei dieser Konfiguration muss zwischen dem Rad und der Bodengruppe lediglich noch der Platz für einen Stoßdämpfer geschaffen werden, sodass diese Radaufhängung vergleichsweise raumsparend und kostengünstig ist. Eine andere, weit bekannte Konfiguration ist die Vorderachse der ersten Volkswagen Käfer aus zwei übereinander liegenden Längslenkern mit zwei Drehstabfedern.

Beide Varianten haben den Nachteil, dass die Drehstabfederung nur für eine bestimmte Gesamtlast optimiert sein kann, und erst ab einem bestimmten Schwellwert anspricht und keine Regelung der Federung in Abhängigkeit von bestimmten Fahrzuständen zulässt.

Eine andere, auf aktuellem Stand der Technik sehr weit verbreitete Radaufhängung, insbesondere für Vorderachsen, sind zwei übereinander angeordnete Querlenker mit einer Schraubenfederung. Auch hier gelten die spezifischen Nachteile einer jeden Stahlfederung, nur mit der Verbesserung, dass durch unterschiedliche Durchmesser der Windungen der Schraubenfeder eine über den Federweg hinweg unterschiedliche Charakteristik der Federung erreicht werden kann.

Um die prinzipiellen Einschränkungen einer Stahlfederung in Bezug auf Fahrsicherheit und Fahrkomfort zu verbessern, ist es bekannter Stand der Technik, die Stahlfedern durch Luftfederbälge zu ersetzen. Dabei liegt es gedanklich nahe, einen, meist zylinderförmigen Luftfederbalg mit der einen Stirnseite nach unten weisend auf der Radaufhängung zu befestigen und mit der anderen Stirnseite nach oben weisend an der Karosserie oder an der Bodengruppe des Fahrzeuges zu befestigen.

Ein großer Nachteil dieser Anordnung ist jedoch, dass oberhalb der Lenker und des Rades die Fahrzeugbodengruppe keine tragfähigen Elemente aufweist, an denen sich die gesamte Fahrzeuglast abstützen könnte. Vielmehr sind üblicherweise oberhalb der Räder in der Regel nur sogenannte "Radkästen" angeordnet, die aus leichtem Stahlblech oder aus Kunststoff bestehen und nicht zur Aufnahme der gesamten Fahrzeuglast dimensioniert sind. Deshalb liegt es nahe, für die Aufhängung der Luftfederbälge die normalen, für Schraubenfedern oder Blattfedern genutzten Aufhängungspunkte zu verwenden. Das ist bei Schraubenfedern jedoch in der Regel deshalb nicht möglich, weil ein Luftfederbalg mit gleicher Zug- und Druckkraft wie eine Schraubenfeder und bei gleicher Länge in der Regel einen deutlich größeren Durchmesser aufweist, sodass der verfügbare Einbauraum in der Regel nicht ausreicht.

Eine mögliche Lösung zur Unterbringung von Luftfedern bei einem Fahrzeug mit zwei tragenden Längsprofilen, wie z. B. einem Lastkraftwagen, zeigt DE 4413146. Beschrieben wird die Umrüstung einer Starrachse, die an Blattfedern aufgehängt ist, auf eine Luftfederung. Dazu wird die Blattfeder halbiert und damit zu einem Längslenker umkonfiguriert. Der ursprünglich von der anderen Hälfte der Blattfederbahn beanspruchte Raum weist genügend große Raumreserven auf, um einen Luftfederbalg unterzubringen.

Sehr viel schwieriger ist es, in einer Vorderachse mit zwei übereinanderliegenden Querlenkern die voluminöse Luftfeder zu integrieren. Nach aktuellem Stand der Technik wird dazu meist um den Stoßdämpfer herum in der unteren Hälfte ein Zylinder aus festem Material angeordnet, auf dem sich ein Hohlzylinder aus flexiblem Material, der nach oben hin luftdicht verschlossen ist, abrollt. Der entscheidende Nachteil eines solchen Luftfederbeines ist jedoch der sehr viel größere Durchmesser als bei einer vergleichbaren Schraubenfeder, weshalb es nicht wahlweise ohne sonstige Änderungen in bereits existierende Querlenkeranordnungen eingebaut werden kann.

Eine Alternative beschreibt die gattungsbildende DE 19611675 für eine doppelte Querlenkervorderachse, die durch einen Torsionsstab an einem Querlenker gefedert wird. Hier wird der Torsionsstab durch ein drehstabiles Rohr ersetzt, an dessen Ende ein kurbelartiger Ausleger aufgesetzt ist, der an einem Ende eines Luftfederbalges angreift, der mit seinem anderen Ende gegen die Bodengruppe oder eine andere Stelle des Fahrzeuges abgestützt ist. Diese Anordnung weist jedoch den massiven Nachteil auf, dass zur Unterbringung des Luftfederbalges der Innenraum des Fahrzeuges abgeteilt werden muss und zusätzlich noch an mindest einer Seitenfläche so verstärkt werden muss, dass er die gesamte Last des Fahrzeuges aufnehmen kann. Der Vorteil einer Luftfederung wird also bei dieser Konfiguration durch eine Verkleinerung des Fahrzeuginnenraumes sowie durch zusätzliche, teure und gewichtige Einbauten erkauft.

Auf diesem Hintergrund hat sich die Erfindung die Aufgabe gestellt, eine raumsparende, luftgefederte Radaufhängung zu entwickeln, bei der der Luftfederbalg oberhalb der oder des Lenkers sowie zwischen dem Rad und einer seitlich ausgerichteten Auflagefläche der Karosserie befestigt ist.

Als Lösung präsentiert die Erfindung eine Radaufhängung mit Längslenkern, bei der die eine Seite des Luftfederbalges an einer etwa vertikalen Auflagefläche der Bodengruppe befestigt ist und die andere Seite des Luftfederbalges an einer Luftfederhalterung befestigt ist, die etwa vertikal auf dem Lenker angeordnet ist und etwa parallel zur Auflagefläche ausgerichtet ist.

Die Kernidee der Erfindung ist es, auf einem Lenker der Radaufhängung eine Luftfederhalterung anzuordnen, die nach oben weist und dadurch in den ungenutzten Leerraum oberhalb des Lenkers und unterhalb des Radkastens hineinragt. An dieser Luftfederhalterung wird der Luftfederbalg nicht etwa - wie bei den anderen Lösungen nach dem Stand der Technik - nach oben weisend angeordnet, sondern vielmehr zur Innenseite des Fahrzeugs hin. Dadurch muss für das andere Ende des Luftfederbalges nicht erst eine entsprechend belastbare Aufhängung geschaffen werden, sondern es kann die Seitenwand des Fahrzeuges genutzt werden, die an dieser Stelle stabil und tragfähig sein muss, da sie bereits die Verschwenkachse des Lenkers trägt.

Bei der Umkonstruktion eines vorhandenen Fahrwerkes ist deshalb nur eine sehr kleine Verstärkung zwischen der Aufhängung des Längslenkers und der Auflagefläche für den Luftfederbalg zu schaffen. Bei der Neukonstruktion eines Fahrwerkes reicht eine geringfügige Verlängerung der Bodengruppe im Bereich der Verschwenkachsen der Lenker.

Der entscheidende Vorzug der Erfindung ist es, eine Luftfederung mit allen Vorzügen in bestehende Konstruktionen von Radaufhängungen zu integrieren, ohne dabei erhebliche Änderungen der Konstruktion vornehmen zu müssen und ohne dabei Einbußen am nutzbaren Raum des Fahrzeuges hinnehmen zu müssen.

Ein wesentlicher Vorteil der Luftfederung bereits in ihrer Grundversion ist das besonders feinfühlige Ansprechen. Dadurch wird der Komfort für die Passagiere erhöht und das Risiko der Beschädigung von empfindlichen Ladegütern verringert. Zusammen mit zusätzlichen Elementen zur situationsgerechten Anpassung des Luftdruckes sind auch für andere Beladungszustände und ungewöhnliche Fahrzustände erhebliche Gewinne an Komfort und Fahrsicherheit möglich.

Eine erfindungsgemäße, luftgefederte Radaufhängung ist für verschiedene Anzahlen und Anordnungen von Lenkern möglich:
Eine sehr einfache Anordnung sind Längslenker, die insbesondere für frontgetriebene Kombinationskraftwagen und Transporter den Vorteil geringer Kosten und sehr guter Raumausnutzung bieten. Da die Abdeckung von Lenker und Rad ein meistens etwa quaderförmiger Radkasten ist, bleibt zwischen dem Fahrzeugrad und der oberen, nach vorne weisenden Kante des Radkastens in der Regel ein Hohlraum, in welchem in vielen Fällen ein Luftfederbalg Platz findet. Die zur Verstärkung des Radkastens erforderlichen Mechanikelemente sind vergleichsweise klein und einfach. Die Übertragung der Kraft vom anderen Ende des Luftfederbalges auf den Längslenker erfordert nur eine ebenfalls sehr einfach konstruierte und kostengünstige, stabartige Luftfederhalterung, die z. B. aus einem U-förmigen Metallprofil aufgebaut werden kann.

Wenn das Fahrzeug mit zwei übereinander liegenden Querlenkern ausgerüstet ist, wie z. B. bei den Vorderachsen von Lastkraftwagen und Omnibussen, ist auch hier meist der Radkasten oberhalb der Querlenker groß genug, um die Luftfeder darin unterzubringen. Erforderlich ist nur eine auch hier sehr einfach zu konstruierende Auflagefläche, die in der Regel auf den beiden großen Längsträgern des LKWs befestigt werden kann, sowie eine kurze Luftfederhalterung, die auf den obersten Querlenker aufgesetzt wird.

Wenn der erforderliche Luftfederbalg so breit ist, dass der verfügbare Einbauraum nicht ausreicht, ist es eine sinnvolle Alternative, stattdessen zwei kleinere Luftfederbälge einzusetzen, die parallel arbeiten. Anstelle einer kreisförmigen Grundfläche ergibt sich jetzt ein längliches Oval als benötigte Auflagefläche. Wenn mehrere kleinere Luftfederbälge parallel zur Schwenkachse des Lenkers aufgereiht werden, wirkt auf alle der gleiche Verschwenkradius der Luftfederhalterung, sodass alle Luftfederbälge identisch sein können.

Wenn parallel arbeitende Luftfederbälge jedoch radial zur Schwenkachse des Lenkers aufgereiht werden, so ist zu beachten, dass jeder Luftfederbalg mit einem anderen Verschwenkradius des Luftfederhalters beaufschlagt wird. Nahe zur Verschwenkachse angeordnete Luftfederbälge weisen deshalb einen kürzeren Federweg auf, als weiter von der Verschwenkachse entfernt angeordnete. In diesem Fall weisen die Luftfederbälge verschiedene Größen auf. Dabei kann es im Sinne einer Verbesserung der Fahreigenschaften und des Komforts sinnvoll sein, Luftfederbälge mit verschiedenen Federkonstanten zu kombinieren oder Luftfederbälge mit verschiedenen Federcharakteristika zu verwenden.

Wenn in wenigstens einem Luftfederbalg ein anderer Luftdruck einstellbar ist als in den übrigen Luftfederbälgen, kann diese Achse mit einer anderen Federvorspannung belastet werden. Wenn z. B. die Luftfedern der Hinterachse eines Nutzfahrzeuges mit einem regelbaren Luftdruck beaufschlagt werden können, kann die Höhe des Fahrzeuges variiert werden und/oder an die Belastung angepasst werden. Dazu muss der Luftfederbalg über eine Rohrleitung mit einem Luftbehälter verbunden sein. In der Regel wird es nicht ausreichen, diesen Luftbehälter nur an einer Tankstelle wieder unter hohen Luftdruck zu setzen, vielmehr ist ein Kompressor an Bord des Fahrzeuges erforderlich.

Wenn die Rohrleitungen zu den Luftfederbälgen der einzelnen Radaufhängungen mit einem Ventil versehen sind und wenn diese Ventile durch ein zentrales Steuergerät ansteuerbar sind, so sind zusätzliche Funktionalitäten möglich. Wenn ein Sensor z. B. eine allzu große Neigung des Fahrzeuges bei schneller Kurvenfahrt erfasst, können die Federn einer Seite durch Schließen des Ventils schlagartig verhärtet werden, wodurch ein Aufschaukeln des Fahrzeuges gemindert wird. Ebenso ist es möglich, die Luftfederbälge an der äußeren Seite des Fahrzeuges unter einen höheren Druck zu setzen, sodass der Neigung des Fahrzeuges zum Außenrand einer Kurve hin entgegengewirkt wird.

Ebenso kann bei Erkennung einer schlechten Wegstrecke die Federung in ihrer Charakteristik verändert werden.

Eine zusätzliche Ausstattungsvariante ist eine automatische Niveauregulierung. Dazu wird an wenigstens einem Rad der Hinterachse und der Vorderachse je ein Höhensensor eingebaut, der mit dem Steuergerät funktionell verbunden ist. Dieser Höhensensor kann z. B. aus einigen, übereinander angeordneten Schaltsensoren bestehen, die die jeweilige Position der Bodengruppe gegenüber dem Rad in Stufen an das Steuergerät melden. Denkbar ist jedoch auch eine sehr fein gestufte oder stufenlose Erfassung der Fahrzeughöhe.

Mit dem Signal einer solchen Sensorgruppe oder eines solchen Sensors kann das Steuergerät über eine entsprechende Veränderung des Luftdruckes das Fahrzeug stets in einer gleichmäßigen Höhe über der Fahrbahn halten oder - abhängig von bestimmten Fahrzuständen - absenken oder erhöhen.

Geeignete Luftfederbälge bestehen im einfachsten Fall aus einem luftgefülltem Hohlzylinder aus flexiblem Material, der mit einer Stirnseite an der Auflagefläche und mit der anderen Stirnseite an der Luftfederhalterung befestigt ist. Die Belastbarkeit eines solchen Luftfederbalges wird weiter erhöht, wenn die Zylindermantelfläche in regelmäßigen Abständen mit Ringen umschlossen wird, die sich um den flexiblen Zylinder herum schließen und auf Zug belastbar sind.

Eine Bauform mit vergleichsweise sehr langem Federweg ergibt sich, wenn der Luftfederbalg aus zwei stirnseitig miteinander verbundenen Hohlzylindern besteht, von denen der eine aus festem Material und der andere aus flexiblem Material besteht. Beide Zylinder sind an ihren freien Stirnseiten verschlossen und mit der Auflagefläche an der Bodengruppe bzw. der Luftfederhalterung verbunden. Wenn ein solcher Luftfederbalg in Längsrichtung zusammengedrückt wird, formt sich der flexible Zylinder wulstartig nach außen und rollt sich auf dem festen Zylinder ab.

Da es sich hierbei um eine Rollbewegung und nicht um eine Gleitbewegung handelt, wird der flexible Zylinder dabei relativ wenig belastet und erreicht trotz seiner großen Verformung eine hohe Lebensdauer. Ein weiterer Vorteil dieser Anordnung ist das Ansprechen der Federung schon bei sehr geringen Änderungen der Belastung.

Eine denkbare Variante ist die Ergänzung eines Luftfederbalges durch eine zusätzliche Stahlfeder. Bei der Umrüstung von Fahrzeugen mit Drehstabfederung bietet sich in diesem Sinne an, den Drehstab durch eine Variante mit niedrigerer Federkonstante zu ersetzen und den verbleibenden Teil der Federkraft durch die zusätzliche Luftfeder aufzubringen.

Im Folgenden sollen weitere Einzelheiten und Merkmale der Erfindung anhand von Beispielen näher erläutert werden. Diese sollen die Erfindung jedoch nicht einschränken, sondern nur erläutern.

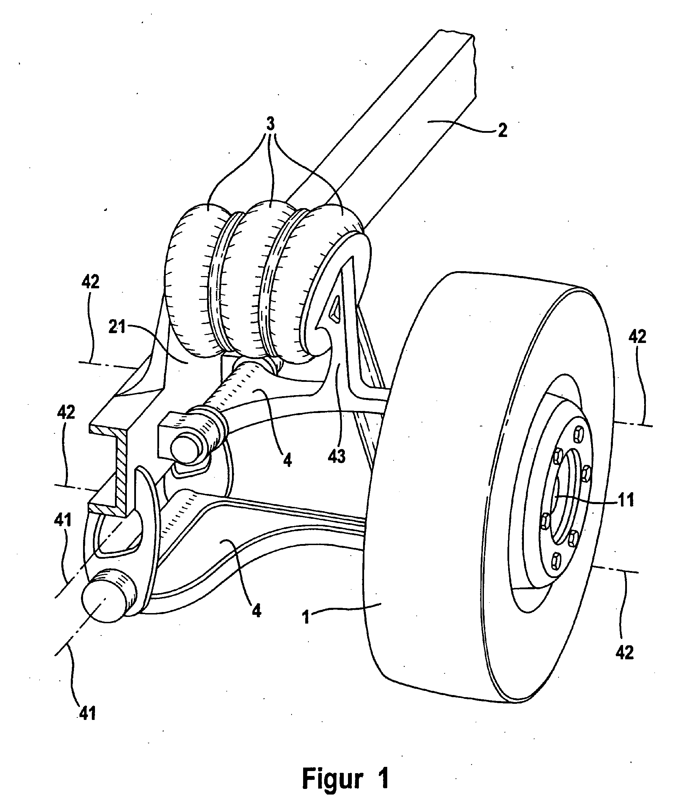

Die **Figur 1** zeigt in schematischer, perspektivischer Darstellung ein Rad 1 eines Fahrzeuges mit seiner Radaufhängung und einem Teil der Bodengruppe 2. Im dargestellten Beispiel besteht die Bodengruppe 2 aus einem U-förmigen Längsträger, wie er für Lastkraftwagen typisch ist. An der Seite sowie an der Unterkante des Längsträgers sind zwei Paar Stützen für die Verschwenkachsen 41 der beiden Lenker 4 angeschweißt.

Im gezeichneten Ausführungsbeispiel weist das Fahrzeug zwei übereinander angeordnete Lenker 4 auf, die das Radlager 11 zur Aufnahme eines Rades 1 tragen, und zwar über eine - hier nicht sichtbare - Zwischenplatte, die gelenkig mit den fahrzeugäußeren Enden der Lenker 4 verbunden ist. Dabei sind die Verschwenkachsen 41 der Lenker 4 parallel zur Fahrtrichtung angeordnet und die Längsachsen der Lenker 4 quer zur Fahrtrichtung. Die Lenker 4 sind hier also als Querlenker ausgebildet.

Auf dem oberen Lenker 4 ist eine Luftfederhalterung 43 angeordnet, die an ihrem oberen Ende über eine kleine Andruckplatte einen Luftfederbalg 3 trägt, der in diesem Beispiel aus drei, voneinander durch zugbelastbare Zwischenringe getrennten Wülsten besteht, und mit seinem anderen, fahrzeuginneren Ende an der Auflagefläche 21 befestigt ist.

In Figur 1 wird nachvollziehbar, wie der Luftfederbalg 3 beim Einfedern gestaucht und beim Ausfedern gelängt wird. Beim Einfedern bewegt sich die Luftfederhalterung 43 um die Verschwenkachse 41 des Lenkers 4 herum auf einer kreisförmigen Bahn. Dadurch verkürzt sich auch der Abstand zwischen der Auflageplatte auf dem freien Ende der Luftfederhalterung 43 und der Auflagefläche 21 - einem Teil der Bodengruppe 2.

Umgekehrt bewegen sich beim Ausfedern des Rades 1 beide Querlenker in der in Figur 1 dargestellten Perspektive nach unten, wodurch sich der Abstand zwischen dem oberen Ende der Luftfederhalterung 43 und der Auflage 21 vergrößert, wodurch sich der Luftfederbalg 3 verlängert, wobei der Luftdruck in seinem Inneren reduziert wird, sodass eine Gegenkraft aufgebaut wird, die den Luftfederbalg wieder auf seine ursprüngliche Länge zusammen zieht.

Hinter dem oberen Querlenker ist der Stoßdämpfer der Radaufhängung zu sehen, den eine erfindungsgemäße Radaufhängung in jedem Fall benötigt.

In Figur 1 fehlen der Übersichtlichkeit halber weitere Elemente wie Spurstangen und Antriebswellen, die an reinen Laufachsen wie z.B. bei Hinterachsen nicht benötigt werden.

### Bezugszeichenliste

- 1: Rad
- 11: Radlager an Lenker 4, zur Aufnahme eines Rades 1
- 2: Bodengruppe
- 21: Auflagefläche, vertikal orientiert, Teil der Bodengruppe 2
- 3: Luftfederbalg 3, an Auflagefläche 21 und Luftfederhalterung 43 befestigt.
- 4: Lenker, an Bodengruppe 2 verschwenkbar befestigt, trägt Radlager 11
- 41: Verschwenkachse des Lenkers 4
- 42: Längsachse des Lenkers 4
- 43: Luftfederhalterung auf Lenker 4, trägt Luftfederbalg 3

## Patentansprüche

1. Fahrzeug mit luftgefederter Radaufhängung, bestehend aus mehreren Rädern (1) der Bodengruppe (2) des Fahrzeugs und wenigstens je einem Luftfederbalg (3) und wenigstens je einem länglichen Lenker (4) pro Rad (1), welcher
- an einem Ende verschwenkbar mit der Bodengruppe (2) verbunden ist und
- am anderen Ende das Radlager (11) zur Aufnahme eines Rades (1) trägt,
wobei die Verschwenkachse (41) und die Längsachse (42) des Lenkers (4) zueinander etwa rechtwinklig orientiert sind und beide etwa horizontal ausgerichtet sind
**dadurch gekennzeichnet, dass**
- die eine Seite des Luftfederbalges (3) an einer etwa vertikalen Auflagefläche (21) der Bodengruppe (2) befestigt ist und
- die andere Seite des Luftfederbalges (3) an einer Luftfederhalterung (43) befestigt ist, die etwa vertikal auf dem Lenker (4) angeordnet ist und etwa parallel zur Auflagefläche (21) ausgerichtet ist.

2. Fahrzeug nach dem vorhergehenden Anspruch 1,**dadurch gekennzeichnet, dass** zwei übereinander angeordnete Lenker (4) pro Rad vorhanden sind.

3. Fahrzeug nach einem der vorhergehenden Ansprüche, **dadurch gekennzeichnet, dass** die Lenker(4)in Fahrtrichtung ausgerichtet sind.

4. Fahrzeug nach einem der vorhergehenden Ansprüche, **dadurch gekennzeichnet, dass** die Lenker (4) quer zur Fahrtrichtung ausgerichtet sind.

5. Fahrzeug nach einem der vorhergehenden Ansprüche, **dadurch gekennzeichnet, dass** zum ersten Luftfederbalg (3) wenigstens ein weiterer Luftfederbalg (3) parallel angeordnet ist.

6. Fahrzeug nach dem vorhergehenden Anspruch 5, **dadurch gekennzeichnet, dass** die Luftfederbälge verschiedene Größen aufweisen.

7. Fahrzeug nach dem vorhergehenden Anspruch 5, **dadurch gekennzeichnet, dass** die Luftfederbälge verschiedene Federkonstanten aufweisen.

8. Fahrzeug nach dem vorhergehenden Anspruch 5, **dadurch gekennzeichnet, dass** die Luftfederbälge verschiedene Federcharakteristika aufweisen.

9. Fahrzeug nach einem der vorhergehenden Ansprüche, **dadurch gekennzeichnet, dass** in wenigstens einem Luftfederbalg (3) ein anderer Luftdruck einstellbar ist als in den übrigen Luftfederbälgen (3)

10. Fahrzeug nach einem der vorhergehenden Ansprüche, **dadurch gekennzeichnet, dass** wenigstens ein Luftfederbalg (3) über eine Rohrleitung mit einem Luftbehälter verbunden ist.

11. Fahrzeug nach einem der vorhergehenden Ansprüche, **dadurch gekennzeichnet, dass** ein Kompressor an Bord des Fahrzeuges vorhanden ist, durch den der Luftdruck in den Luftfederbälgen (3) einstellbar ist.

12. Fahrzeug nach den vorhergehenden Ansprüchen 10 und 11, **dadurch gekennzeichnet, dass** ein Steuergerät sowie damit verbundene Ventile in den Rohrleitungen vorhanden sind.

13. Fahrzeug nach dem vorhergehenden Anspruch 12, **dadurch gekennzeichnet, dass** der Luftdruck in den Luftfederbälgen durch je einen Drucksensor erfassbar ist, der mit dem Steuergerät funktionell verbunden ist.

14. Fahrzeug nach einem der vorhergehenden Ansprüche, **dadurch gekennzeichnet, dass** zur Erfassung der Fahrzeugposition zwischen wenigstens einem Lenker (4) pro Rad (1) und der Bodengruppe (2) ein Höhensensor eingebaut ist, der mit dem Steuergerät funktionell verbunden ist.

15. Fahrzeug nach einem der vorhergehenden Ansprüche, **dadurch gekennzeichnet, dass** der Luftfederbalg (3) aus einem luftgefüllten Hohlzylinder aus flexiblem Material besteht, der mit einer Stirnseite an der Auflagefläche (21) und mit der anderen Stirnseite an der Luftfederhalterung (43) befestigt ist.

16. Fahrzeug nach dem vorhergehenden Anspruch 15, **dadurch gekennzeichnet, dass** auf der Außenseite der Zylindermantelfläche des Luftfederbalges (3) wenigstens ein auf Zug belastbarer ring aufliegt, der sich um den flexiblen Zylinder herum schließt.

17. Fahrzeug nach dem vorhergehenden Anspruch 15, **dadurch gekennzeichnet, dass** der Luftfederbalg (3) aus einem ersten, inneren, festen Zylinder besteht, auf dessen äußerer Zylindermantelfläche die Außenwand eines zweiten Zylinders aus flexiblem Material in Längsrichtung der beiden Zylinder abrollbar ist und beide Zylinder an je einer Stirnseite miteinander verbunden sind und an den jeweils anderen Stirnseiten verschlossen sind.

18. Fahrzeug nach einem der vorhergehenden Ansprüche, **dadurch gekennzeichnet, dass** die Verschwenkachse (41) des Lenkers (4) als Drehstabfeder ausgebildet ist.

## Claims

1. Vehicle with air-sprung wheel suspension, comprising a plurality of wheels (1) of the vehicle undercarriage (2) and at least one air-spring bellows (3) and at least one elongated suspension arm (4) per wheel (1), which
- is pivotably connected at one end to the undercarriage (2) and
- at the other end carries the wheel bearing (11) for receiving a wheel (1),
the pivot axis (4) and the longitudinal axis (2) of the suspension arm (4) being approximately orthogonally oriented to one another and both being approximately horizontally aligned, **characterised in that**
- one side of the air-spring bellows (3) is fixed on an approximately vertical support surface (21) of the undercarriage (2), and
- the other side of the air-spring bellows is fixed on an air-spring mount (43), which is arranged approximately vertically on the suspension arm (4) and is aligned approximately parallel to the support surface (21).

2. Vehicle according to the preceding claim 1, **characterised in that** two suspension arms (4) disposed one above the other are present per wheel.

3. Vehicle according to one of the preceding claims, **characterised in that** the suspension arms (4) are aligned in the travel direction.

4. Vehicle according to one of the preceding claims, **characterised in that** the suspension arms (4) are aligned transversely to the travel direction.

5. Vehicle according to one of the preceding claims, **characterised in that** at least one further air-spring bellows (3) is arranged parallel to the first air-spring bellows (3).

6. Vehicle according to the preceding claim 5, **characterised in that** the air-spring bellows have different sizes.

7. Vehicle according to the preceding claim 5, **characterised in that** the air-spring bellows have different spring constants.

8. Vehicle according to the preceding claim 5, **characterised in that** the air-spring bellows have different spring characteristics.

9. Vehicle according to one of the preceding claims, **characterised in that** at least one air-spring bellows (3) can be charged with a different air pressure than the other air-spring bellows (3).

10. Vehicle according to one of the preceding claims, **characterised in that** at least one air-spring bellows (3) is connected to an air container via a tubing.

11. Vehicle according to one of the preceding claims, **characterised in that** a compressor is present on board the vehicle, via which the air pressure in the air-spring bellows (3) is adjustable.

12. Vehicle according to the preceding claims 10 and 11, **characterised in that** a control unit and valves connected thereto are present in the pipelines.

13. Vehicle according to the preceding claim 12, **characterised in that** the air pressure in the air-spring bellows can be registered by one pressure sensor in each case, which is functionally connected to the control unit.

14. Vehicle according to one of the preceding claims, **characterised in that,** for registering the vehicle position between at least one suspension arm (4) per wheel (1) and the undercarriage (2), a height sensor is incorporated, which is functionally connected to the control unit.

15. Vehicle according to one of the preceding claims, **characterised in that** the air-spring bellows (3) consists of an air-filled hollow cylinder of flexible material, which is fixed with one end face on the support surface (21) and with the other end face on the air-spring mount (43).

16. Vehicle according to the preceding claim 15, **characterised in that,** on the outer side of the cylindrical surface of the air-spring bellows (3), there lies at least one ring, which can be tensile loaded and closes around the flexible cylinder.

17. Vehicle according to the preceding claim 15, **characterised in that** the air-spring bellows (3) consists of a first inner rigid cylinder, on the outer lateral surface of which the outer wall of a second cylinder of flexible material can be rolled up in the longitudinal direction of the two cylinders and both cylinders are connected together at one end face in each case, and are sealed at the other end faces in each case.

18. Vehicle according to one of the preceding claims, **characterised in that** the pivot axis (41) of the suspension arm (4) is designed as a torsion-bar spring.

## Revendications

1. Véhicule avec suspension de roue pneumatique, composé de plusieurs roues (1), de l'ensemble du plancher (2) du véhicule et d'au moins un coussin pneumatique (3) chacun, et d'au moins un guidage (4) longitudinal par roue (1), qui
■ est relié, de façon à pouvoir pivoter, à une de ses extrémités avec l'ensemble du plancher (2) et
■ porte à l'autre extrémité le roulement de roue (11) destiné à réceptionner une roue (1),
sachant que l'axe de pivotement (41) et l'axe longitudinal (42) du guidage (4) sont orientés à angle droit l'un par rapport à l'autre et que les deux sont à peu près orientés.à l'horizontale
**caractérisé par le fait que**
• l'un des côtés du coussin pneumatique (3) est fixé à une surface de support à peu près verticale (21) de l'ensemble du plancher (2) et que
• l'autre côté du coussin pneumatique (3) est fixé à une fixation pour coussin pneumatique (43) qui est disposée à peu près verticalement sur le guidage (4) et est orienté à peu près parallèlement à la surface de support (21).

2. Véhicule selon la revendication précédente 1, **caractérisé par** la présence de deux guidages (4) par roue.

3. Véhicule selon une des revendications précédentes, **caractérisé par le fait que** les guidages (4) sont orientés dans le sens de la marche.

4. Véhicule selon une des revendications précédentes, **caractérisé par le fait que** les guidages (4) sont orientés transversalement par rapport au sens de la marche.

5. Véhicule selon une des revendications précédentes, **caractérisé par le fait qu'**au moins un coussin pneumatique (3) supplémentaire est disposé parallèlement au premier coussin pneumatique (3).

6. Véhicule selon la revendication précédente 5, **caractérisé par le fait que** les coussins pneumatiques présentent différentes tailles.

7. Véhicule selon la revendication précédente 5, **caractérisé par le fait que** les coussins pneumatiques présentent différentes constantes de ressort.

8. Véhicule selon la revendication précédente 5, **caractérisé par le fait que** les coussins pneumatiques présentent différentes caractéristiques de ressort.

9. Véhicule selon une des revendications précédentes, **caractérisé par le fait qu'**on peut, dans au moins un coussin pneumatique (3) régler une autre pression pneumatique que dans les autres coussins pneumatiques (3).

10. Véhicule selon une des revendications précédentes, **caractérisé par le fait qu'**au moins un coussin pneumatique (3) est relié à un réservoir d'air par l'intermédiaire d'une conduite de tuyauterie.

11. Véhicule selon une des revendications précédentes, **caractérisé par le fait qu'**un compresseur se trouve à bord du véhicule, à travers lequel on peut régler la pression pneumatique dans les coussins pneumatiques (3).

12. Véhicule selon une des revendications précédentes 10 et 11,
**caractérisé par le fait qu'**il y a un appareil de commande, et les valves correspondantes, dans les conduites de tuyauterie.

13. Véhicule selon la revendication précédente 12, **caractérisé par le fait que** la pression pneumatique dans chacun des coussins pneumatiques peut être enregistrée par un capteur de pression relié à l'appareil de commande au plan fonctionnel.

14. Véhicule selon une des revendications précédentes, **caractérisé par le fait qu'**un capteur de hauteur destiné à enregistrer la position du véhicule, qui est relié à l'appareil de commande au plan fonctionnel, est monté entre au moins un guidage (4) par roue (1) et l'ensemble du plancher (2).

15. Véhicule selon une des revendications précédentes, **caractérisé par le fait que** le coussin pneumatique (3) consiste en un cylindre creux en matériau souple rempli d'air, qui est fixé à une de ses faces avant à la surface de support (21) et à la fixation du coussin pneumatique (43) avec l'autre face avant.

16. Véhicule selon la revendication précédente 15, **caractérisé par le fait qu'**au moins un anneau pouvant être chargé sur traction, qui se referme sur le cylindre souple, repose sur la face externe de la surface du manteau du cylindre du coussin pneumatique (3).

17. Véhicule selon la revendication précédente 15, **caractérisé par le fait que** le coussin d'air (3) consiste en un premier cylindre intérieur fixe, sur la face externe duquel on peut dérouler, dans le sens de la longueur des deux cylindres, la paroi extérieure d'un second cylindre en matériau souple, les deux cylindres étant reliés l'un à l'autre à l'une de leur face avant et leurs autres faces avant étant refermées.

18. Véhicule selon une des revendications précédentes, **caractérisé par le fait que** l'axe de pivotement (41) du guidage (4) prend la forme d'un ressort de barre de torsion.
